**Europäisches Patentamt**

**European Patent Office**

**Office européen des brevets**

(11) Veröffentlichungsnummer: **0 093 280**
**B1**

(12) **EUROPÄISCHE PATENTSCHRIFT**

(45) Veröffentlichungstag der Patentschrift:
**18.12.85**

(21) Anmeldenummer: **83103479.8**

(22) Anmeldetag: **11.04.83**

(51) Int. Cl.⁴: **E 04 B 7/08**, E 04 C 2/54,
E 04 C 2/50, F 16 S 1/14

(54) **Bauteil, bestehend aus Stützelementen und daran anliegenden Kunststoffflächenelementen.**

(30) Priorität: **29.04.82 DE 8212293 U**

(43) Veröffentlichungstag der Anmeldung:
**09.11.83 Patentblatt 83/45**

(45) Bekanntmachung des Hinweises auf die Patenterteilung:
**18.12.85 Patentblatt 85/51**

(84) Benannte Vertragsstaaten:
**DE FR IT NL**

(56) Entgegenhaltungen:
**EP - A - 0 070 930**
**WO - A - 82/03101**
**DE - U - 8 130 989**
**DE - U - 8 304 119**

(73) Patentinhaber: **Röhm GmbH, Kirschenallee
Postfach 4242, D-6100 Darmstadt 1 (DE)**

(72) Erfinder: **Buchmüller, Hans-Peter, Buchenweg 9,
D-6110 Dieburg (DE)**
Erfinder: **Kerk, Klaus, Bessunger Strasse 10a,
D-6103 Griesheim (DE)**
Erfinder: **Kolbe, Klaus, Dr., Dipl.-Phys.,
Taubenstrasse 16, D-6107 Reinheim 5 (DE)**

## Beschreibung

Die Erfindung betrifft ein Bauteil, dessen wesentlicher Bestandteil ein Flächenelement aus extrudiertem Kunststoff ist, das starr, aber bei grösseren Abmessungen auch elastisch ist. Das Flächenelement kann eben oder gewellt sein, ist aber vorzugsweise bogenförmig gekrümmt. In erster Linie bezieht sich die Erfindung auf die Art der Befestigung des Flächenelements auf einem Stützelement, an welchem es anliegt.

Es ist allgemein gebräuchlich, steife, ebene oder gekrümmte Flächenelemente aus Kunststoff mittels Ankern, die in Öffnungen in der Kunststofffläche befestigt sind, mit einem Stützelement zu verbinden. Diese Art der Befestigung ist arbeitsintensiv und bereitet häufig wegen der unterschiedlichen Wärmeausdehnung des Kunststoffes und des Materials des Stützelements Schwierigkeiten. Gebräuchlich ist auch die Befestigung mittels umlaufender Rahmen, die an dem Stützelement befestigt sind. Diese Art der Befestigung ist sehr teuer.

Aus dem deutschen Gebrauchsmuster 8010662 ist es bekannt, ein bogenförmig gekrümmtes Flächenelement aus starrem Kunststoff mittels eines darübergespannten Haltebandes an einem bogenförmigen Stützelement zu befestigen. Das Halteband ist bei Aussenanwendungen der Witterung ausgesetzt und muss dementsprechend beständig sein oder geschützt werden. Ausserdem stört das aufgelegte Halteband in manchen Fällen das Aussehen.

Es ist auch schon vorgeschlagen worden, mehrschalige Flächenelemente aus Kunststoff mit durchlaufenden hinterschnittenen Nuten zu versehen, in denen Befestigungsmittel zum Verbinden des Flächenelements mit einem Stützelement verankert werden. Die punktweise Befestigung ist nicht in allen Fällen ausreichend, um die auf das Flächenelement einwirkenden Kräfte ohne Bruchgefahr auf das Stützelement abzuleiten.

Aus der DE-A Nr. 3009551 ist es bekannt, mehrere winkelig zusammengefügte ebene Flächenelemente mit durchlaufenden Hohlräumen in ihrer gegenseitigen Winkelstellung festzuhalten und mit einem Stützelement zu verbinden, indem man durch die Hohlräume der zusammengefügten Flächenelemente ein Seil spannt, dessen herausragende Enden an dem Tragelement befestigt werden.

In der älteren EP-A Nr. 70930 – dieses Dokument fällt unter Artikel 54(3) EPÜ – ist eine freitragende Dachkonstruktion aus in Längsrichtung gebogenen Hohlkammerplatten, die nur an ihren Enden gehalten werden, vorgeschlagen. Zum Schutz gegen das Abheben der Hohlkammern durch aufwärts gerichtete Windkräfte können Verankerungsstäbe durch die Hohlkammern geführt und an den Auflagestellen der Hohlkammerplatten befestigt werden.

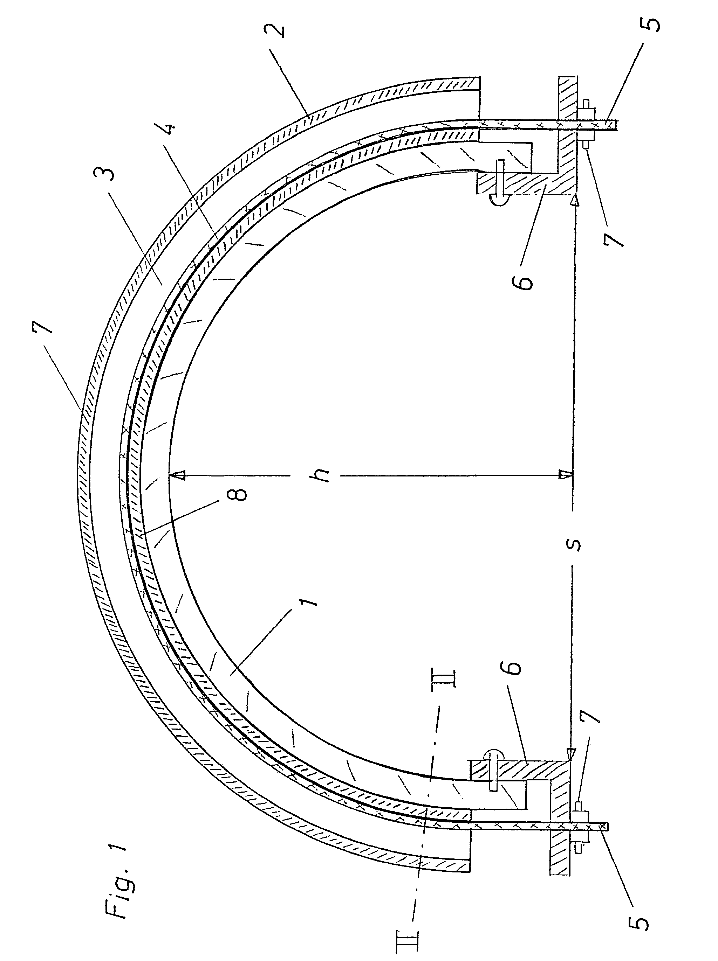

Der Erfindung liegt die Aufgabe zugrunde, ein Bauteil bestehend aus einem Stützelement einem daran anliegenden Flächenelement aus extrudiertem, steifem Kunststoff mit wenigstens einem durchlaufenden, anextrudierten Hohlraum und Halteelementen zur Verbindung des Flächenelements mit dem Stützelement so zu gestalten, dass es mit geringem Arbeitsaufwand hergestellt werden kann und die Halteelemente nicht punktweise an dem Flächenelement angreifen und nicht frei an der von dem Stützelement abgewandten Oberfläche liegen. Die gestellte Aufgabe wird durch das Bauelement gemäss Anspruch 1 gelöst. Zweckmässige Ausführungsformen sind in den Fig. 1 bis 3 schematisch dargestellt.

Fig. 1 zeigt im Schnittbild ein Tonnengewölbe mit einem bogenförmig gekrümmten Flächenelement 2, welches auf einem bogenförmigen Stützelement 1 aufliegt.

Fig. 2 zeigt einen Schnitt durch das Tonnengewölbe längs der Linie II-II in Fig. 1 mit unterschiedlichen Gestaltungen der Randverbindungen.

Fig. 3 zeigt im Ausschnitt einen Querschnitt durch eine andere Ausführungsform der Erfindung mit Pfetten 10 als Stützelementen.

Das erfindungsgemässe Bauteil ist auf einfache Weise zu erstellen und zu montieren. Bei der einfachsten Ausführungsform bedarf es keiner Bohrungen oder sonstigen Verankerungen an dem Flächenelement selbst. Der als Halteelement dienende Stab 4 liegt geschützt im Innern des Hohlraums des Flächenelements und ist dadurch nicht der Korrosion und Bewitterung ausgesetzt. Der Stab liegt mehr oder weniger durchgehend an der Innenwand der Hohlkammer an, so dass die zwischen dem Stab und dem Flächenelement wirkenden Haltekräfte auf die ganze Länge des Flächenelements verteilt werden. Dadurch werden punktförmige Belastungen vermieden. Darüber hinaus bietet das neue Flächenelement durch den Verzicht auf aussenliegende Halterungen ein gefälliges Aussehen.

Bei der Ausführungsform gemäss Fig. 1 ist das Flächenelement 2 bogenförmig gekrümmt und auf das ebenfalls bogenförmig gekrümmte Stützelement 1 aufgelegt. Durch den Hohlraum 3 des Flächenelements führt ein elastischer Stab 4, dessen herausragende Enden 5 durch Bohrungen in den Winkelstücken 6 geführt sind und hinter diesen mit Klemmschellen 7 verspannt sind. Durch die Spannkraft wird das Flächenelement 2 auf dem Stützelement 1 festgehalten. Bei unterschiedlicher Wärmedehnung des Flächenelementes 2 kann sich dieses gegenüber dem Stützelement 1 bewegen.

Durch eine Reihung gleichartiger Bauelemente kann ein zusammenhängendes Tonnengewölbe errichtet werden. In diesem Falle werden die bogenförmig gekrümmten Stützelemente 1 in solchen Abständen aufgestellt, dass sie jeweils die Ränder der Flächenelemente 2 unterstützen.

Die Flächenelemente 2 sind vorzugsweise aus steifem, lichtdurchlässigem Kunststoff, wie Polymethylmethacrylat, Polycarbonat, Polyvinylchlorid, Polypropylen u. ä., einstückig extrudiert. Insbesondere sind es sogenannte Stegdoppelplatten, die aus zwei parallelen Schichten 7 und 8 und senkrecht dazwischen angeordneten Stegen 9 aufgebaut sind. Sie schliessen eine Vielzahl von Hohlräumen 3 ein. Der Krümmungsradius ist durch die Steifigkeit und Elastizität des Materials begrenzt und liegt im allgemeinen im Bereich von 1 bis 10 m. Vorzugsweise überwölbt das Bauteil eine Spannweite s von 0,5 bis 10 m und hat eine Scheitelhöhe h von 0,1 bis 5 m.

In der Regel genügt je ein Stab 4 in den randständigen Kammern zur Befestigung des Flächenelements auf dem Stützelement 1, jedoch können bei Bedarf weitere Stäbe 4 in die dazwischenliegenden Hohlkammern eingeführt werden. Die Flächenelemente von nebeneinanderliegenden erfindungsgemässen Bauteilen können sich an den Stossstellen überlappen und ggf. mit Falzen miteinander verzahnt sein. Sie können jedoch auch im Randbereich eine Nut 11 aufweisen und mit dieser auf ein Stützelement 12 mit U-Profil aufgelegt werden.

Die Wandungen der Hohlkammern, die die Befestigungsstäbe 4 aufnehmen, müssen so stark sein, dass sie den auftretenden Kräften gewachsen sind. Im allgemeinen sind Wandstärken von 0,5 bis 5 mm ausreichend. Die Hohlkammern einschliesslich der sie einschliessenden Aussenwände können z. B. 5 bis 50 mm dick sein.

Die Stäbe 4 können aus Draht, insbesondere kunststoffummantelten Draht oder aus flachen Bändern aus Metall oder Kunststoff bestehen. Sie können auch als Litze oder als geflochtenes Band aus einer Mehrzahl von Einzelfasern zusammengesetzt sein. Bänder aus farblosen zähen Kunststoffen, z. B. Polyamid, können in ein lichtdurchlässiges Flächenelement nahezu unsichtbar eingezogen werden. Die Stäbe 4 werden in der Regel vor dem Zusammenbau des Bauelements so in die Hohlräume eingeführt, dass ihre Enden 5 aus den offenen Stirnseiten der Hohlräume herausragen. Mit diesen Enden werden sie an dem Stützelement 1 befestigt. Dazu können Befestigungsmittel der verschiedensten Art dienen, für die die in Fig. 1 dargestellte Ausführungsform nur ein beliebiges Beispiel darstellt.

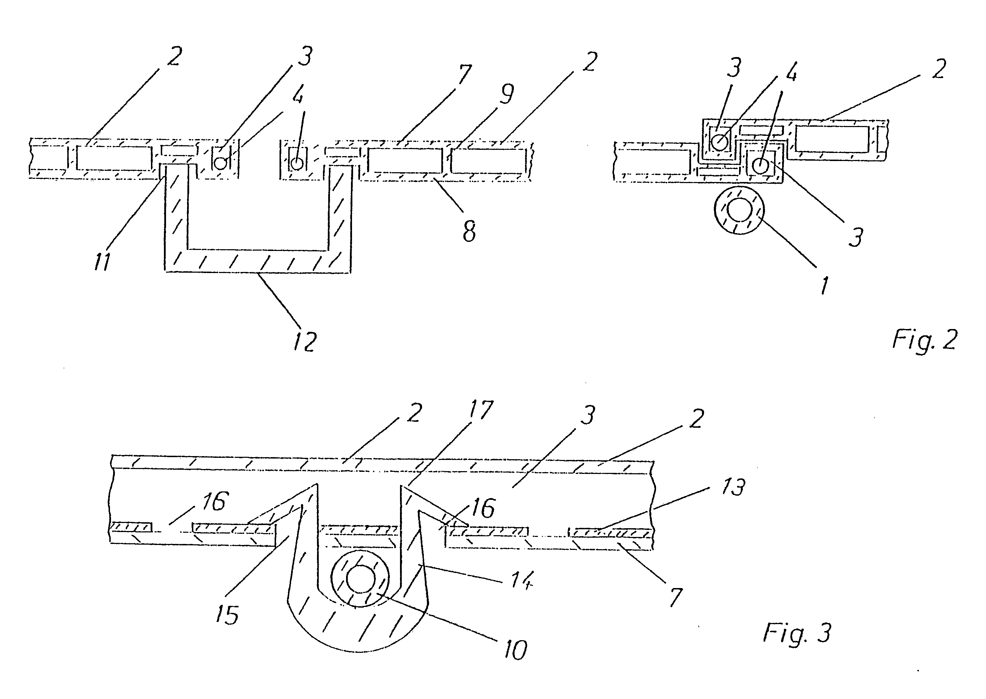

Die Art der Verbindung der Stäbe 4 mit dem Stützelement 1 richtet sich weitgehend nach der Lage der Stützelemente bzw. ihrer Anordnung als tragende Unterkonstruktion. Bei der Ausführungsform gemäss Fig. 3 dienen als Stützelemente waagerecht angeordnete Pfetten 10, auf denen das ebene oder gebogene Flächenelement 2 linienförmig aufliegt. In den Hohlraum 3 ist ein Lochband 13 eingeführt. Die Anker 14 greifen um die Pfette 10 herum und sind durch Öffnungen 15 in der Wandung 7 des Flächenelements in den Löchern 16 des Lochbandes 13 verankert. Wenn die Wandung 7 dünn und zäh ist, beispielsweise eine 0,5 bis 1 mm dicke Schicht aus Polycarbonat, kann ein mit Spitzen 17 versehener Anker ohne Vorbohrung durch das Wandmaterial 7 gestossen und in das Lochband 13 eingesetzt werden, wo er sich mit dem Widerhaken an den Schenkelenden verankert.

Das erfindungsgemässe Bauteil eignet sich zur reihenweisen Anordnung zu grösseren Gebäudeteilen, wie z. B. Lichtdächern, Tonnengewölben, Terrassenüberdachungen u.dgl. oder zur Errichtung ganzer Gebäude, wie z. B. Gewächshäuser oder Schwimmhallen.

## Patentansprüche

1. Bauteil, bestehend
a) aus einer tragenden Unterkonstruktion, die wenigstens ein Stützelement (1) enthält,
b) aus einem über seine gesamte Erstreckung auf dem Stützelement (1) festgelegten Flächenelement (2) aus extrudiertem steifem Kunststoff mit wenigstens einem durchlaufenden anextrudierten Hohlraum (3), und
c) aus wenigstens einem Halteelement, bestehend aus einem den Hohlraum (3) längs durchlaufenden Stab (4) und Befestigungsmitteln, wobei das Flächenelement (2) mittels des genannten Stabes (4) in ebener, gewellter oder bogenförmig gekrümmter Gestalt auf dem Stützelement (1) festgehalten wird und die Befestigungsmittel den Stab (4) mit der Unterkonstruktion verbinden.

2. Bauteil nach Anspruch 1, dadurch gekennzeichnet, dass die Enden des Stabes (4) aus den Enden des Hohlraumes (3) herausragen und durch Befestigungsmittel (6, 7, 14) mit dem Stützelement (1) verbunden sind.

3. Bauteil nach Anspruch 1, dadurch gekennzeichnet, dass die Wandung des Hohlraumes (3) wenigstens eine Öffnung (15) aufweist, und dass das Befestigungsmittel (14), welches den Stab (4) mit dem Stützelement (1) verbindet, durch die Öffnung (15) führt.

4. Bauteil nach den Ansprüchen 1 bis 3, dadurch gekennzeichnet, dass das Flächenelement (2) bogenförmig gekrümmt ist.

## Claims

1. Structural unit consisting of
(a) a load-bearing substructure which contains at least one support element (1),
(b) a surface element (2) fixed to the support element (1) over its entire extend, this surface element (2) consisting of extruded rigid plastics with at least one cavity (3) extruded therein and passing through it, and
(c) at least one retaining element consisting of a bar (4) passing longitudinally through the cavity (3) and fixing means, the surface element (2) being secured in place on the support element (1) by means of the above-mentioned bar (4) of planar, corrugated or arcuate configuration, whilst the fixing means connect the bar (4) to the substructure.

2. Structural unit as claimed in Claim 1, characterised in that the ends of the bar (4) project out of the ends of the cavity (3) and are connected to the support element (1) by fixing means (6, 7, 14).

3. Structural unit as claimed in Claim 1, characterised in that the wall of the cavity (3) contains at least one opening (15) and in that the fixing means (14) which connect the bar (4) to the support element (1) lead through the opening (15).

4. Structural unit as claimed in Claims 1 to 3, characterised in that the surface element (2) is curved in an arcuate configuration.

## Revendications

1. Elément préfabriqué de construction, se composant:

a) d'une infrastructure porteuse qui comprend au moins un élément de support (1),

b) d'un élément de surface (2) en matière synthétique rigide extrudée, comportant au moins une cavité continue (3) formée à l'extrusion, fixé sur toute son étendue sur l'élément de support (1), et

c) d'au moins un élément de retenue, se composant d'une barre (4) qui s'étend d'un bout à l'autre le long de la cavité (3) et de moyens de fixation, l'élément de surface (2), sous forme d'élément plan, ondulé ou courbé en arc de cercle, étant maintenu sur l'élément de support (1) à l'aide de ladite barre (4) et les moyens de fixation raccordant la barre (4) à l'infrastructure.

2. Elément préfabriqué de construction selon la revendication 1, caractérisé en ce que les extrémités de la barre (4) font saillie sur les extrémités de la cavité (3) et sont raccordées à l'élément de support (1) par des moyens de fixation (6, 7, 14).

3. Elément préfabriqué de construction selon la revendication 1, caractérisé en ce que la paroi de la cavité (3) comporte au moins une ouverture (15) et en ce que les moyens de fixation (14), qui raccordent la barre (14) à l'élément de support (1), passent à travers cette ouverture (15).

4. Elément préfabriqué de construction selon l'une des revendications 1 à 3, caractérisé en ce que l'élément de surface (2) est courbé en arc de cercle.

Fig. 1

0 093 280

Fig. 2

Fig. 3

0 093 280